**Europäisches Patentamt**

**European Patent Office**

**Office européen des brevets**

(19)

(11) Veröffentlichungsnummer: **0 242 694**
**B1**

(12) **EUROPÄISCHE PATENTSCHRIFT**

(45) Veröffentlichungstag der Patentschrift:
**24.05.89**

(51) Int. Cl.⁴: **F16D 55/224**, F16D 55/22

(21) Anmeldenummer: **87105130.6**

(22) Anmeldetag: **07.04.87**

(54) **Bremsbacke für eine Scheibenbremse.**

(30) Priorität: **18.04.86 DE 8610698 U**

(43) Veröffentlichungstag der Anmeldung:
**28.10.87 Patentblatt 87/44**

(45) Bekanntmachung des Hinweises auf die Patenterteilung:
**24.05.89 Patentblatt 89/21**

(84) Benannte Vertragsstaaten:
**DE ES FR GB IT**

(56) Entgegenhaltungen:
**DE-A- 3 024 082**
**DE-B- 1 203 551**
**DE-B- 1 425 367**
**GB-A- 1 562 911**

(73) Patentinhaber: **LUCAS INDUSTRIES public limited company, Great King Street, Birmingham, B19 2XF West Midlands(GB)**

(72) Erfinder: **Rath, Heinrich Bernhard, Sebastian-Kneipp-Strasse 76a, D-5414 Vallendar(DE)**
Erfinder: **Danne, Ulrich, Weiser Strasse 44, D-5413 Bendorf-Sayn(DE)**

(74) Vertreter: **Goetz, Rupert et al, Patentanwälte Wuesthoff- v. Pechmann-Behrens-Goetz Schweigerstrasse 2, D-8000 München 90(DE)**

## Beschreibung

Die Erfindung betrifft eine Bremsbacke für eine Scheibenbremse mit
- einer Rückenfläche zur Abstützung der Bremsbacke an einem Betätigungsglied der Scheibenbremse,
- einer Bremsfläche, die von einem Reibmaterial gebildet ist,
- mindestens einem Loch zur Führung der Bremsbacke an einem Führungszapfen der Scheibenbremse, das mindestens annähernd rechtwinklig zur Rückenfläche angeordnet ist, und
- einer Schutzhülse für den Führungszapfen, die sich gleichachsig mit dem Loch in Richtung zur Ebene der Bremsfläche erstreckt und aus zusammen mit dem Reibmaterial verschleißbarem Werkstoff besteht.

Es sind Bremsbacken dieser Gattung bekannt (DE-A-3 024 082), bei denen das Reibmaterial an einer Trägerplatte befestigt ist, an der die Rückenfläche zur Abstützung an einem Betätigungskolben ausgebildet ist. Die Trägerplatte hat an mindestens einer Seite einen in Umfangsrichtung der zugehörigen Bremsscheibe wegragenden, ohrmuschelartigen Ansatz mit einem Loch für einen Führungszapfen, der an einem Bremsträger der Scheibenbremse befestigt ist und sich durch das Loch sowie eine Schutzhülse hindurcherstreckt. Die Schutzhülse ist entweder von der Rückenfläche der Trägerplatte aus durch deren Loch hindurchgesteckt oder schließt sich in Richtung zur Bremsscheibe an dieses an. In beiden Fällen erstreckt sich die Schutzhülse freiliegend von dem ohrmuschelartigen Ansatz weg. Der Führungszapfen ist durch die Schutzhülse weitgehend vor Verschmutzung und Korrosion geschützt. Wenn die Bremsbacke an nur einem Führungszapfen geführt ist und dementsprechend nur einen ohrmuschelartigen Ansatz aufweist, dann ist dieser an der Einlaufseite der Bremsbacke angeordnet, das ist die Seite der Bremsbacke, die von einem beliebigen Punkt der vorwärtsdrehenden Bremsscheibe zuerst erreicht wird.

Wenn ein Fahrzeug, das eine Scheibenbremse mit der im vorstehenden beschriebenen bekannten Bremsbacke aufweist, bei nasser Fahrbahn abgebremst wird und ein Wasserfilm durch Einwirkung des Reibmaterials auf eine Bremsfläche der Bremsscheibe von dieser abgestreift wird und sich auf der Einlaufseite der Bremsbacke staut, besteht die Möglichkeit, daß Wasser von der der Bremsscheibe zugewandten Stirnseite des Führungszapfens aus zwischen diesen und die Schutzhülse eindringt und am Führungszapfen doch im Laufe der Zeit Korrosion hervorruft. Außerdem läßt sich bei der bekannten Anordnung nicht ausschließen, daß die Schutzhülse durch Steinschlag beschädigt und dadurch unwirksam wird.

Der Erfindung liegt deshalb die Aufgabe zugrunde, einen Bremsbacken, der dazu vorgesehen ist, an wenigstens einem Führungszapfen einer Scheibenbremse geführt zu werden, derart weiterzubilden, daß er den Führungszapfen noch besser als bisher vor Korrosion und sonstiger Beschädigung schützt.

Die Aufgabe ist bei einer Bremsbacke der eingangs beschriebenen Gattung erfindungsgemäß dadurch gelöst, daß die Schutzhülse mindestens auf einem Teil ihrer Länge in das Reibmaterial eingebettet ist.

Das Reibmaterial, das die Schutzhülse umgibt, hält von dieser äußere mechanische Beanspruchungen weitgehend oder vollständig fern. Die Schutzhülse kann deshalb derart dünnwandig und aus solchem Werkstoff hergestellt sein, daß sie besonders gut abdichtend am Führungszapfen anliegt. Das Reibmaterial, das die Schutzhülse umgibt, schützt diese vor Steinschlag und streift Wasser, das möglicherweise an der zugehörigen Bremsfläche haftet, von dieser ab, ehe es die Schutzhülse erreichen kann. Es ist somit sehr unwahrscheinlich, daß Wasser zwischen die Schutzhülse und den von ihr umschlossenen Teil des Führungszapfens eindringt und dort Korrosion hervorruft. Im Gegenteil kann damit gerechnet werden, daß sich innerhalb der von Reibmaterial umschlossenen Schutzhülse vor dem Ende des Führungszapfens schon nach einigen Bremsungen abgeriebenes Reibmaterial sammelt und einen mehr oder weniger dichten Stopfen und somit einen zusätzlichen Schutz gegen das Eindringen von Wasser bildet. Bei alldem ist der Platzbedarf der Bremsbacke gering, da seitliche Ansätze der Trägerplatte nicht erforderlich sind.

Die erfindungsgemäße Abstützung der Schutzhülse durch sie umgebendes Reibmaterial ermöglicht eine bevorzugte Ausführungsform der Erfindung, bei der die Schutzhülse sich bis zur Bremsfläche erstreckt, und zwar schon dann, wenn das Reibmaterial noch vollständig unabgenutzt ist. Reibungskräfte, die beim Bremsen von der Bremsscheibe auf die Schutzhülse ausgeübt werden, werden von dieser unmittelbar auf das umgebende Reibmaterial abgeleitet und beanspruchen die Schutzhülse deshalb nicht auf Biegung. Erst recht kann die Schutzhülse beim Anpressen der Bremsbacke an die Bremsscheibe nicht gestaucht oder geknickt werden. Es ist deshalb völlig unbedenklich, daß die Schutzhülse von Anfang an bis zur Bremsfläche reicht, sofern sie mindestens bis in deren Nähe in Reibmaterial eingebettet ist.

Unabhängig davon, ob das Reibmaterial in bekannter Weise an einer Trägerplatte befestigt ist oder die Bremsbacke im wesentlichen allein von Reibmaterial gebildet wird, ist es vorteilhaft, wenn die Schutzhülse nur im Reibmaterial angeordnet ist.

Wenn die Erfindung bei einer Bremsbacke mit einer Trägerplatte angewandt wird, an der die Rückenfläche und das mindestens eine Loch ausgebildet und das Reibmaterial befestigt ist, dann besteht eine vorteilhafte Ausführungsform der Erfindung darin, daß das Loch mit einer Führungsbüchse aus verschleißfestem Werkstoff ausgekleidet ist, an die sich die Schutzhülse anschließt. Diese Ausführungsform hat den Vorteil, daß bei allen Überlegungen, die Gestaltung und Werkstoff der Schutzhülse betreffen, ausschließlich deren Schutzfunktion bedacht zu werden braucht, während der Führungsbüchse die Aufgabe, die Bremsbacke am zugehörigen Führungszapfen zu führen, vorbehalten bleibt, sodaß bei der Auswahl von Werkstoffen für die Führungsbüchse deren Gleitfähigkeit und Verschleißfestigkeit im Vordergrund stehen können.

Erfindungsgemäße Bremsbacken lassen sich in einer Scheibenbremse besonders vorteilhaft in der Weise verwenden, daß zwei Bremsbacken zueinander spiegelsymmetrisch gestaltet und einander gegenüberliegend an einem Bremsträger geführt sind, der die Bremsscheibe umgreift und beiderseits von ihr je einen von zwei Führungszapfen trägt, an denen je eine der Bremsbacken geführt ist. Dabei sind die Führungszapfen vorzugsweise miteinander fluchtend angeordnet, sodaß auch die Schutzhülsen der beiden Bremsbacken miteinander fluchten.

Ein Ausführungsbeispiel der Erfindung wird im folgenden anhand schematischer Zeichnungen mit weiteren Einzelheiten erläutert: Es zeigt:

Fig. 1 eine teilweise als Schnitt I-I in Fig. 2 gezeichnete Draufsicht einer Scheibenbremse mit erfindungsgemäßen Bremsbacken und

Fig. 2 die teilweise als Schnitt II-II in Fig. 1 dargestellte Ansicht derselben Scheibenbremse von deren fahrzeugäußeren Seite her.

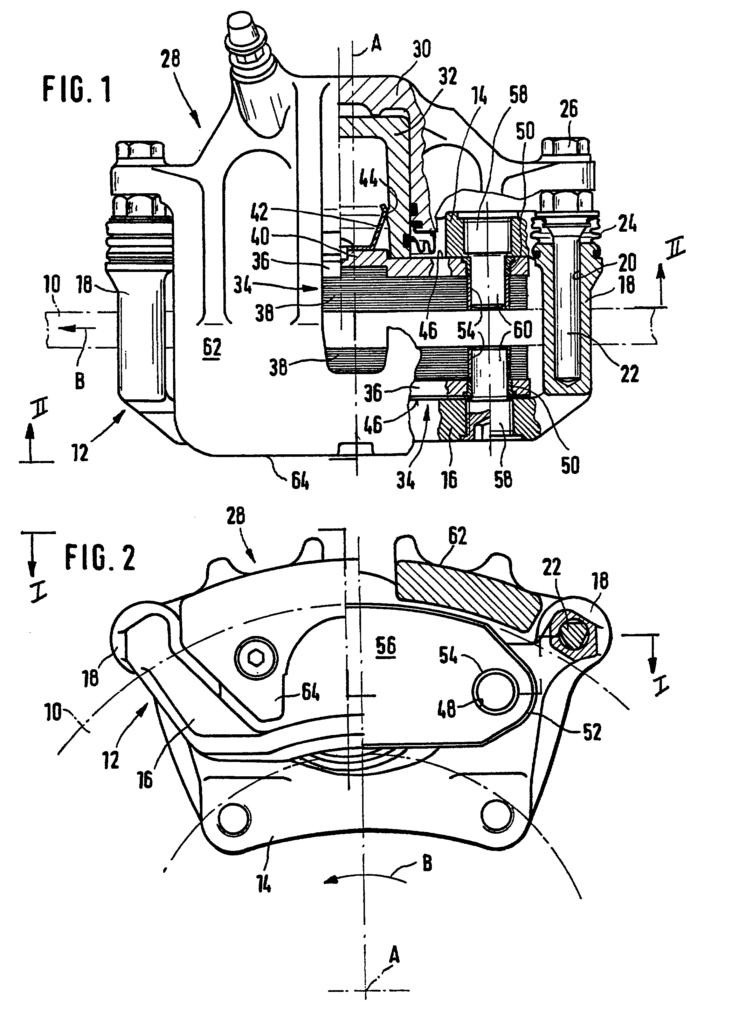

Die in Fig. 1 und 2 dargestelle Scheibenbremse ist einer mit strichpunktierten Linien angedeuteten Bremsscheibe 10 zugeordnet, deren Achse mit A und deren Drehrichtung bei Vorwärtsfahrt des zugehörigen Fahrzeugs mit einem Pfeil B bezeichnet sind. Die Scheibenbremse weist einen Bremsträger 12 auf, der eine in bezug auf das zugehörige Fahrzeug innere Platte 14 und eine äußere Platte 16 hat. Die Platten 14 und 16 sind beide ungefähr U-förmig und sind durch zwei parallele Arme 18 miteinander verbunden, die sich in geringem Abstand außerhalb des äußeren Randes der Bremsscheibe 10 erstrecken und je eine zu deren Achse A parallele, zur fahrzeuginneren Seite der Bremse hin offene, zylindrische Bohrung 20 enthalten.

In den Bohrungen 20 ist je ein Gleitbolzen 22 geführt, der mit dem zugehörigen Arm 18 durch eine faltenbalgartige Dichtmanschette 24 verbunden ist. An den beiden Gleitbolzen 22 ist mittels je einer Schraube 26 ein Schwimmsattel 28 lösbar befestigt. Der Schwimmsattel 28 umgreift den äußeren Rand der Bremsscheibe 10 in der Art einer Faust; solche Schwimmsättel werden auch als Faustsättel bezeichnet.

An der fahrzeuginneren Seite des Schwimmsattels 28 ist ein hydraulischer Zylinder 30 ausgebildet, in dem ein Betätigungsglied in Gestalt eines becherförmigen Kolbens 32 geführt ist. Der Kolben 32 ist zur unmittelbaren Betätigung einer Bremsbacke 34 vorgesehen, deren Hauptbestandteile eine Trägerplatte 36 aus Stahl und ein daran befestigter Bremsbelag aus Reibmaterial 38 sind. An der Trägerplatte 36 ist mittig ein kreiszylindrischer Vorsprung 40 ausgeprägt, der mit geringem radialem Spiel in den Kolben 32 eingreift. An den Vorsprung 40 ist eine kreuzförmige Blattfeder 42 angenietet, deren Schenkel hinter eine ringförmige Rippe 44 an der Innenseite des Kolbens 32 greifen und dadurch die Bremsbacke 34 am Herausfallen hindern, bis sie in der eingebauten Bremse durch die Bremsscheibe 10 gegen Verlorengehen gesichert ist. Die Trägerplatte 36 hat eine abgesehen von dem Vorsprung 40 ebene Rückenfläche 46, an welcher der Kolben 32 mit seiner ringförmigen Stirnfläche anliegt.

In der Nähe ihres einlaufseitigen Endes weist die Trägerplatte 36 ein abgestuft zylindrisches Loch 48 auf, in das von der Rückenfläche 46 aus eine Führungsbüchse 50 eingepreßt ist. Die Führungsbüchse 50 besteht beispielsweise aus Sintermetall, hat eine zylindrische Bohrung und ist bündig mit der Rückenfläche 46 sowie mit der gegenüberliegenden Fläche der Trägerplatte 36, die mit Ausnahme eines rings umlaufenden schmalen Randes 52 vollständig mit dem Bremsbelag aus Reibmaterial 38 bedeckt ist. An die Führungsbüchse 50 schließt sich unmittelbar eine mit ihr gleichachsige Schutzhülse 54 an, die auf ihrer gesamten Länge rings von dem Reibmaterial 38 umgeben ist und sich bis zu dessen Bremsfläche 56 erstreckt.

In die fahrzeuginnere Platte 14 des Bremsträgers 12 ist ein Bolzen 58 eingeschraubt, der einen zur Bremsscheibe 10 hin von dieser Platte 14 wegragenden Führungszapfen 60 aufweist. Der Führungszapfen 60 erstreckt sich durch die Führungsbüchse 50 hindurch und in die Schutzhülse 54 hinein, in der er in einem geringen Abstand von der Bremsscheibe 10 endet. Dieser Abstand ist ebensogroß oder nur wenig größer als das übliche Bremslüftspiel.

Der Schwimmsattel 28 weist ein über die Bremsscheibe 10 hinweggreifendes Brückenteil 62 auf, an das sich ein Paar auf der fahrzeugäußeren Seite der Bremsscheibe 10 radial nach innen ragender Finger 64 anschließt. An diesen Fingern 64 ist eine zweite, über den Schwimmsattel 28 indirekt betätigbare Bremsbacke 34 abgestützt, die spiegelsymmetrisch zur ersten, vom Kolben 32 direkt betätigbaren Bremsbacke 34 gestaltet und geführt ist. Die Einzelteile der zweiten Bremsbacke 34 sind deshalb mit den gleichen Bezugszeichen versehen, die den Ein zelteilen der ersten Bremsbacke 34 und deren Führung zugeordnet worden sind. Die zweite Bremsbacke 34 hat also ebenfalls eine Führungsbüchse 50, die in ihre Trägerplatte 36 nahe deren einlaufseitigem Ende eingepreßt ist, sowie eine Schutzhülse 54, die auf ihrer gesamten Länge in das Reibmaterial 38 eingebettet ist und bis zur Bremsfläche 56 reicht.

Mit dieser Ausgestaltung ist die zweite Bremsbacke 34 in entsprechender Weise wie die erste Bremsbacke 34, jedoch spiegelsymmetrisch und gegenläufig zu dieser, am Bremsträger 12 verschiebbar geführt. Zu diesem Zweck ist auch in die fahrzeugäußere Platte 16 des Bremsträgers 12 ein Bolzen 58 eingeschraubt, der mit dem in die Platte 14 eingeschraubten Bolzen 58 fluchtet und wie dieser einen Führungszapfen (60) aufweist.

In dem Maß, wie das Reibmaterial 38 der Bremsbacken 34 beim Bremsen verschleißt, nutzen sich auch die Schutzhülsen 54 ab. In gleichem Maß verschieben sich die Bremsbacken 34 auf den Führungszapfen 60 von der zugehörigen Platte 14 bzw.

16 weg. Dabei bildet sich innerhalb der Schutzhülsen 54 vor dem Ende des zugehörigen Führungszapfens 60 je ein Hohlraum, der sich allmählich mit Abrieb vom zugehörigen Reibmaterial 38 füllt. Die Führungszapfen 60 werden auf diese Weise besonders gut gegen Korrosion geschützt. An der Rückseite jeder Bremsbacke 34 kann der zugehörige Führungszapfen 60, wie aus der DE-A-3 024 082 bekannt, von einem Faltenbalg umschlossen sein, sodaß auch von der Rückseite her keine Fremdstoffe eindringen können, die Korrosion bewirken könnten.

**Patentansprüche**

1. Bremsbacke ür eine Scheibenbremse mit
– einer Rückenfläche (46) zur Abstützung der Bremsbacke (34) an einem Betätigungsglied (32,64) der Scheibenbremse,
– einer Bremsfläche (56), die von einem Reibmaterial (38) gebildet ist,
– mindestens einem Loch (48) zur Führung der Bremsbacke (34) an einem Führungszapfen (60) der Scheibenbremse, das mindestens annähernd rechtwinklig zur Rückenfläche (46) angeordnet ist, und
– einer Schutzhülse (54) für den Führungszapfen (60), die sich gleichachsig mit dem Loch (48) in Richtung zur Ebene der Bremsfläche (56) erstreckt und aus zusammen mit dem Reibmaterial (38) verschleißbarem Werkstoff besteht, dadurch gekennzeichnet, daß die Schutzhülse (54) mindestens auf einem Teil ihrer Länge in das Reibmaterial (38) eingebettet ist.

2. Bremsbacke nach Anspruch 1, dadurch gekennzeichnet, daß die Schutzhülse (54) sich bis zur Bremsfläche (56) erstreckt.

3. Bremsbacke nach Anspruch 1 oder 2, dadurch gekennzeichnet, daß die Schutzhülse (54) nur im Reibmaterial (38) angeordnet ist.

4. Bremsbacke nach Anspruch 3 mit einer Trägerplatte (36), an der die Rückenfläche (46) und das mindestens eine Loch (48) ausgebildet und das Reibmaterial (38) befestigt ist, dadurch gekennzeichnet, daß das Loch (48) mit einer Führungsbüchse (50) aus verschleißfestem Werkstoff ausgekleidet ist, an die sich die Schützhülse (54) anschließt.

**Claims**

1. A brake pad for a disc brake, comprising
– a rear surface (46) to support the brake pad (34) on an actuating member (32, 64) of the disc brake,
– a braking surface (56) formed by friction material (38),
– at least one hole (48) to guide the brake pad (34) on a guide pin (60) of the disc brake which hole is disposed at least approximately at right angles with respect to the rear surface (46), and
– a protective sleeve (54) for the guide pin (60) which sleeve extends coaxially with the hole (48) in a direction towards the plane of the braking surface (56) and is made of a material which wears down together with the friction material (38), characterized in that the protective sleeve (54) is embedded in the friction material (38) at least for part of its length.

2. The brake pad as claimed in claim 1, characterized in that the protective sleeve (54) extends up to the braking surface (56).

3. The brake pad as claimed in claim 1 or 2, characterized in that the protective sleeve (54) is arranged exclusively in the friction material (38).

4. The brake pad as claimed in claim 3, comprising a backplate (36) at which the rear surface (46) and the at least one hole (48) are formed and the friction material (38) is secured, characterized in that the hole (48) is lined with a guide bushing (50) of wear-resistant material which bushing is followed by the protective sleeve (54).

**Revendications**

1. Patin de frein destiné à un frein à disque comportant
– une surface (46) servant à l'appui du patin de frein (34) sur un organe (32, 64) d'actionnement du frein à disque,
– une surface (56) de freinage qui est constituée d'un matériau (38) de friction,
– au moins un orifice (48) pour le guidage du patin de frein (34) sur un tenon (60) de guidage du frein à disque qui est disposé au moins approximativement perpendiculaire à la surface arrière (46), et
– une douille (54) de protection pour le tenon (60) de guidage qui s'étend coaxialement à l'orifice (48) en direction du plan de la surface (56) de freinage et qui est constituée de matériau susceptible de s'user en même temps que le matériau (38) de friction, caractérisé en ce que la douille (54) de protection est noyée au moins sur une partie de sa longueur dans le matériau (38) de friction.

2. Patin de frein selon la revendication 1, caractérisé en ce que la douille (54) de protection s'étend jusqu'à la surface (56) de freinage.

3. Patin de frein selon la revendication 1 ou 2, caractérisé en ce que la douille (54) de protection n'est située que dans le matériau (38) de friction.

4. Patin de frein selon la revendication 3 comportant une plaquette support (36) sur laquelle sont formés la surface arrière (46) et l'orifice (48) au moins unique et sur laquelle est fixé le matériau (38) de friction, caractérisé en ce que l'orifice (48) est revêtu intérieurement d'une douille (50) de guidage en matériau résistant à l'usure, sur laquelle s'assemble la douille (54) de protection.

FIG. 1

FIG. 2